# EUROPÄISCHE PATENTSCHRIFT

(11) **EP 2 449 280 B1**
(45) Veröffentlichungstag und Bekanntmachung des Hinweises auf die Patenterteilung: **17.01.2018**
(21) Anmeldenummer: 10729849.9
(22) Anmeldetag: 30.06.2010
(51) Int. Cl.: F16D 65/14

(54) **BREMSSATTEL EINER SCHEIBENBREMSE**
CALIPER OF A DISK BRAKE
ÉTRIER DE FREIN D' UN FREIN À DISQUE

(30) Priorität: 30.06.2009 DE 102009027363; 24.07.2009 DE 102009034503
(43) Veröffentlichungstag der Anmeldung: 09.05.2012
(73) Patentinhaber: Continental Teves AG & Co. oHG, 60488 Frankfurt (DE)
(72) Erfinder: SALZMANN, Sebastian, 63477 Maintal (DE); MEHNER, Götz, 61462 Königstein (DE); PETRI, Ralph, 65843 Sulzbach (DE); KALFF, Christoph, 55296 Lörzweiler (DE)
(74) Vertreter: Neumann, Stephan
(86) Internationale Anmeldenummer: PCT/EP2010/059280
(87) Internationale Veröffentlichungsnummer: WO 2011/000867

(56) Entgegenhaltungen:
- EP-A1- 0 436 906
- EP-A1- 1 387 097
- WO-A1-2010/110005
- WO-A2-2006/056598
- DE-A1-102005 054 113
- US-A- 5 565 514
- US-A1- 2002 079 172

## Beschreibung

Die Erfindung betrifft einen Bremssattel einer Scheibenbremse mit einem Axiallager, umfassend ein Gehäuse mit einer Bohrung, in der ein Kolben axial verschiebbar angeordnet ist, und eine Welle zur Betätigung, die drehbar und axial verschiebbar gelagert ist und mit einem Wellenende eine Gehäuseöffnung durchgreift, und zwei gegeneinander verdrehbare Rampenelemente, von denen ein Rampenelement drehfest mit dem Gehäuse und ein Rampenelement drehfest mit der Welle verbunden ist, und eine Nachstellvorrichtung mit einer Spindel, wobei die Nachstellvorrichtung zwischen der Welle und dem Kolben vorhanden ist, und ein zwischen Spindel und Welle wirksames Axiallager.

Aus der EP 0 436 906 B1 ist ein gattungsgemäßer kombinierter Bremssattel für eine Kraftfahrzeug-Scheibenbremse mit einem stirnflächig sternförmig genuteten Axiallager bekannt. Der Bremssattel umfasst ein Gehäuse mit einer Bohrung, in der ein Kolben zur Bremsbetätigung verschiebbar angeordnet ist. Für Feststellbremsungen ist im Bremsgehäuse eine Welle drehbar gelagert, wobei die Welle das Bremsgehäuse durchgreift und mit einem Rampenelement einer Rampenanordnung verbunden ist. Ein zweites zugehöriges Rampenelement ist gehäusefest angeordnet.

Aufgrund einer keilgetriebeartigen Wirkung zwischen Welle und Rampenanordnung, erfährt die Welle durch eine rotatorische Betätigungsbewegung weiterhin eine axiale Verschiebung. Die Welle überträgt diese axiale Verschiebung auf eine Spindel einer Nachstellvorrichtung, wobei zwischen Welle und Spindel ein Axiallager vorgesehen ist. Die axiale Verschiebung wird über die Nachstellvorrichtung auf den Kolben übertragen. Dabei ist eine Patrone der Nachstellvorrichtung drehfest mit der gehäusefesten Rampenanordnung verbunden.

Zur Entlastung der Bauteile der Verdrehsicherung wird vorgeschlagen, das Axiallager aus Stahlblech auszuführen, das mit einer reibungsarmen Beschichtung aus Polytetrafluorethylen versehen ist, in die ein Blei-Kupfer-Gemisch eingelagert ist.

Es wurde festgestellt, dass derart beschichtete Stahlscheiben bei besonders intensiver Beanspruchung, und/oder über eine hohe Betriebsdauer hinweg, unter dem Mangel leiden können, dass sich die Beschichtung ablöst. Diese Ablösung tritt insbesondere ein, wenn irgendeine, vielleicht geringfügige, Schiefstellung der beteiligten Reibpartner gegeben ist. Denn eine überhöhte Flächenpressung infolge punktueller Überlastung der Beschichtung verursacht deren Ablösen im Bereich einer Grenzfläche zwischen Basiswerkstoff und Beschichtungswerkstoff des Axiallagers. In der Folge sind die reibungsgeminderten Eigenschaften des Axiallagers nicht mehr gegeben, und es besteht das Risiko, dass abgelöste Beschichtungsteile oder Partikel in die Bremsflüssigkeit gelangen könnten, und diese verunreinigen. Es sei angemerkt, dass Achsfluchtungsfehler oder Schiefstellungen bei den gattungsgemäßen Bremssätteln nicht völlig ausgeschlossen werden kann, weshalb in der EP 436 906 B1 zur Umgehung dieser Problematik insbesondere ein konvex gewölbtes Axiallager empfohlen wird.

Es ist eine Aufgabe der vorliegenden Erfindung einen verbesserten, gattungsgemäßen Bremssattel mit insbesondere verbessertem Verschleißverhalten bei geringen Herstellungskosten bereitzustellen.

Die Aufgabe wird durch die Merkmale des Anspruchs 1 gelöst. Ein besonderer Vorteil wird dadurch erzielt, dass erfindungsgemäß ein vollständiger Prozessschritt, nämlich ein Beschichtungsprozess eines Tragkörpers, eingespart werden kann, und dass keine aufwändige Kalottenform erzeugt werden muss. Dadurch sind die Herstellkosten reduziert. Weitere Einzelheiten der Erfindung gehen aus Unteransprüchen zusammen mit der Beschreibung anhand der Zeichnung eines bevorzugten Ausführungsbeispiels hervor. In der Zeichnung zeigt:

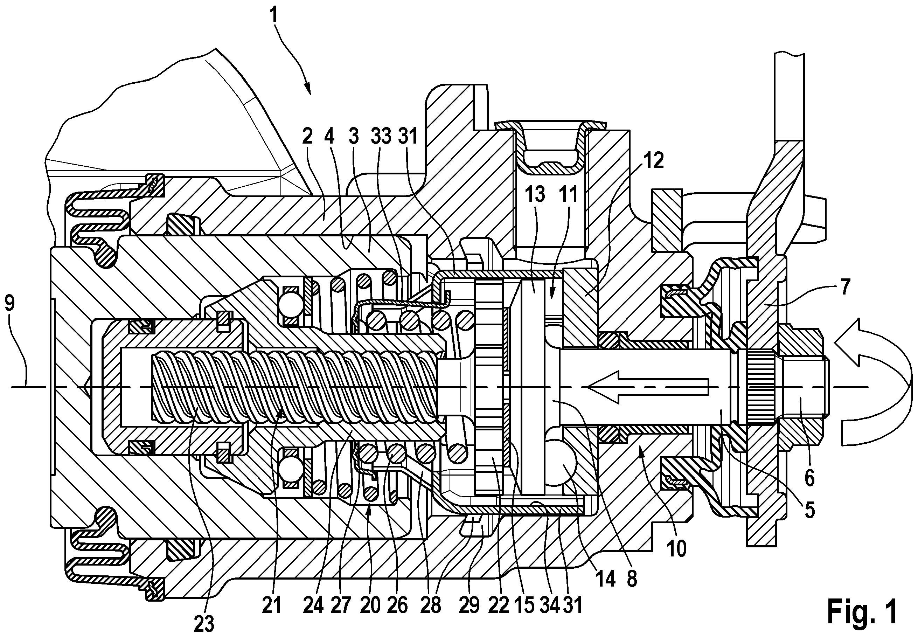

Fig. 1 eine vergrößerte Schnittansicht eines Bremssattels mit Nachstell- und Betätigungsvorrichtung gemäß einer ersten Ausführungsform,
Fig. 2 etwa maßstäbliche Explosionszeichnung der Ausführungsform mit Axiallagerscheibe, und

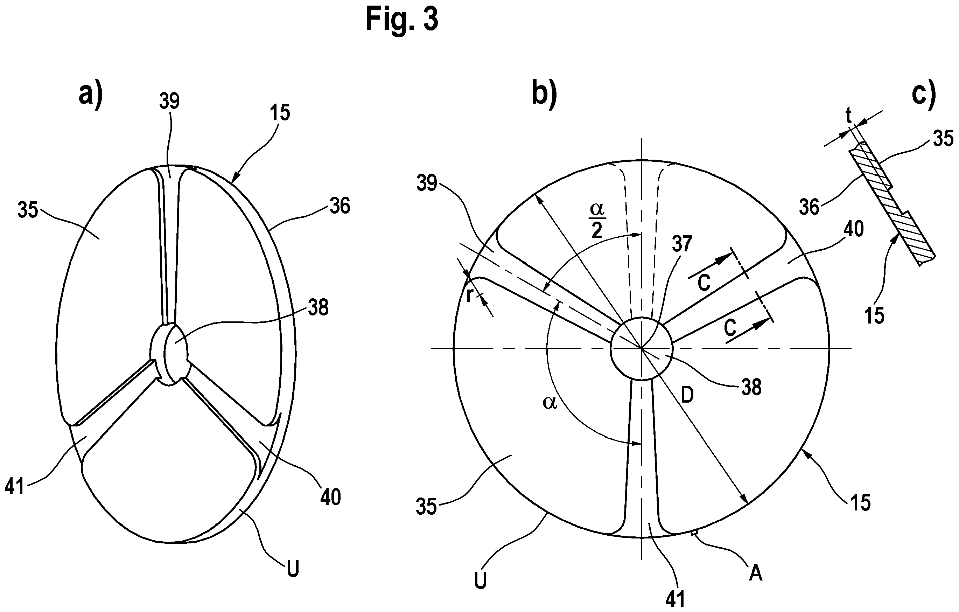

Fig. 3a,b,c vergrößerte Ansichten der Axiallagerscheibe.

Ein Bremssattel 1 einer Kraftfahrzeug-Scheibenbremse umfasst unter anderem ein Gehäuse 2, einen Kolben 3, der zur Bremsbetätigung in einer Bohrung 4 verschiebbar angeordnet ist. Dabei kann der Kolben 3 im Falle einer Betriebsbremsung mittels hydraulischer Druckbeaufschlagung verschoben werden. Zur Umsetzung einer Feststellbremsung ist eine Welle 5 vorgesehen, mittels derer der Kolben 3 entlang einer Längsachse 9 über eine Betätigungsvorrichtung 10 innerhalb der Bohrung 4 verschoben werden kann. Die Welle 5 greift mit einem Wellenende 6, an welchem ein Betätigungshebel 7 angebracht ist, durch eine Öffnung des Gehäuses 2. Die Betätigungsvorrichtung 10 wirkt unter Zwischenschaltung einer längenveränderlichen Nachstellvorrichtung 20 auf den Kolben 3 ein.

Die Betätigungsvorrichtung 10 umfasst eine Rampenanordnung 11, die ein gehäusefestes Rampenelement 12 sowie ein demgegenüber drehbares Rampenelement 13 aufweist. Dabei ist das Rampenelement 13 einstückig auf einem scheibenförmigen Endabschnitt 8 der Welle 5 ausgebildet. Zwischen den Rampenelementen 12,13 sind mehrere Wälzkörper 14 angeordnet, so dass die Rampenanordnung 10 bei gegenseitiger Verdrehung der Rampenelemente 12,13 eine - durch einen Pfeil symbolisierte - axiale Verschiebung der Welle 5 entlang der Längsachse 9 in Betätigungsrichtung bewirkt.

Zwischen dem Endabschnitt 8 der Welle 5 und dem Kolben 3 ist eine längenveränderliche Nachstellvorrichtung 20 vorhanden, die den Hub der Rampenanordnung 11 auf den Kolben 3 überträgt und weiterhin den Verschleiß der nicht dargestellten Bremsbeläge sowie der zugehörigen nicht gezeigten Bremsscheibe automatisch ausgleicht. Diese Nachstellvorrichtung 20 umfasst unter anderem eine Spindel 21 mit einem Endabschnitt 22 und eine auf den Schaft 23 der Spindel 21 aufgeschraubte Mutter 24, die am Kolben 3 anliegt. Zwischen der Stirnseite der Spindel 21 und dem Endabschnitt 8 ist ein Axiallager 15 in scheibenförmiger Gleitlagerausführung vorgesehen.

Eine Feder 26 spannt über einen Federtopf 27 die Spindel 21 gegen das Axiallager 15 vor. Der Federtopf 27 stützt sich mittels ausgestellter Laschen 28 axial und radial in Ausnehmungen 29 in der Bohrung 4 ab.

Auf dem Umfang eines Endabschnitts 22 der Spindel 21 sind mehrere regelmäßige Zähne der Verzahnung 30 angebracht, so dass der Endabschnitt 22 einen quasi sternförmigen Querschnitt aufweist. Um die Spindel 21 gegen Verdrehen zu sichern, umgreift eine gehäusefeste Patrone 31 den Endabschnitt 22. Da die Patrone 31 zumindest teilweise ein, dem Endabschnitt 22 entsprechendes, quasi-sternförmiges Innenprofil 34 hat, greift sie in die Verzahnung 30 und bildet mit dem Endabschnitt 22 eine formschlüssige Verbindung in tangentialer Richtung. Dadurch ist die Spindel 21 in Betätigungsrichtung verschiebbar, aber gleichzeitig verdrehsicher innerhalb der Patrone 31 und damit auch im Bremssattel 1 aufgenommen.

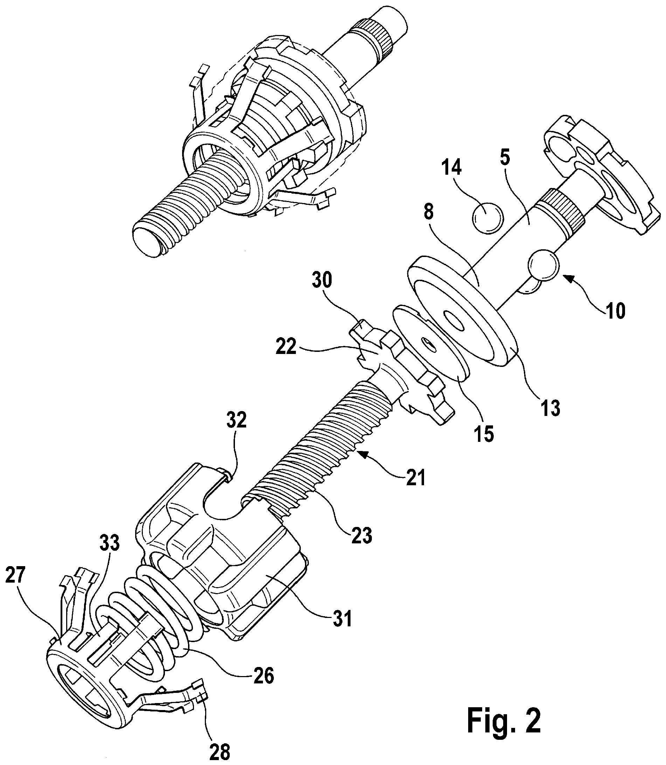

Zur Bildung einer einfach handhabbaren Montageeinheit sind die wesentlichen Komponenten der mechanischen Betätigungsvorrichtung 10 und der Nachstellvorrichtung 20 erfindungsgemäß zu einer Baugruppe zusammengefügt, die insbesondere in Fig. 2 verdeutlicht ist. Dabei ist eine vormontierte Zusammenfassung der Patrone 31 durch eine Fixierung zwischen Federtopf 27 und dem Rampenelement 12 ermöglicht. Die vormontierbare Baugruppe enthält weiterhin die Rampenanordnung 11, die Welle 5, das Axiallager 15, die Spindel 21, die Feder 26 und die Patrone 31 sowie den Federtopf 27.

Zum Zusammenbau der Patrone 31 werden zuerst die Rampenanordnung 11, das Axiallager 15 sowie die Spindel 21 in die Patrone 31 eingesetzt, die anschließend durch umgelegte Laschen 32 mit dem drehfesten Rampenelement 12 verschlossen wird, und so die Einzelteile verliersicher in Gestalt der Patrone 31 zusammengehalten werden. Danach lässt sich der Federtopf 27 zusammen mit der innen liegenden Feder 26 an ausgestellten Laschen 33 mit der Patrone 31 verrasten. Die dadurch entstandene vormontierte Montageeinheit lässt sich separat handhaben und verkrallt sich nach dem Einführen in die Bohrung 4 über weitere ausgestellte Laschen 28 des Federtopfes 27 in Ausnehmungen 29 im Bremssattel 1.

Die Feststellbremsfunktion geschieht wie folgt. Bei Betätigung der Feststellbremse wird über den Betätigungshebel 7 die Welle 5 und der Endabschnitt 8 gedreht und die Rampenanordnung 11 verdreht. Dadurch bewirken die beiden Rampenelementen 12 und 13 eine axiale Verschiebung der Welle 5 und des Endabschnitts 8. Diese axiale Verschiebung wird über das Axiallager 25 auf den Endabschnitt 22 bzw. auf die Spindel 21 übertragen. Da die Spindel 21 über die Verzahnung 30 des Endabschnitts 22 drehfest in der Patrone 31 geführt ist, vollzieht die Spindel 21 ausschließlich eine axiale Verschiebung ohne Rotation. Über die auf dem Schaft 23 aufgeschraubte Mutter 24 wird der Kolben 3 axial bewegt und betätigt die nicht gezeigten Bremsbeläge in Richtung nicht dargestellter Bremsscheibe.

Nachstehend wird auf wesentliche Merkmale des Axiallagers 15 im Sinne der Erfindung eingegangen. Demnach ist das Axiallager 15 einstückig aus einer homogenen Werkstoffmatrix ausgebildet. Anders ausgedrückt umfasst das Axiallager 15 eine Werkstoffkomponente, wobei diese Werkstoffkomponente eine weitestgehend homogene Mischung mehrerer Bestandteile mit unterschiedlichen Anteilen ist, so dass im Ergebnis keine Aufteilung in einen Basis- oder Trägerwerkstoff (Tragteil) und in einen Beschichtungswerkstoff (Beschichtungsteil) vorliegt. Durch die Verwendung einer derartigen quasihomogenen Werkstoffmatrix wird ein einheitlicher, einstückiger Körper geschaffen, welcher durch und durch dieselben Reibungseigenschaften über die gesamte Bauteillebensdauer aufweist, selbst wenn in gewissem Umfang Verschleiß eintritt. Also ist nicht zu befürchten, dass sich das Reibungsverhalten lebensdauerbedingt verändert, und eine gesonderte Ablösung der Beschichtung oder von Beschichtungspartikeln erfolgt. Ein besonderer Vorteil dieser Konstruktion ist dadurch gegeben, dass die gesonderte Herstellung eines Tragkörpers für das Axiallager 15, und dessen Vorbereitung für eine Beschichtung, als auch der Beschichtungsvorgang als solcher entfällt, so dass eine besonders kostengünstige Herstellung ermöglicht ist. Die Herstellung kann beispielsweise durch Formung wie insbesondere durch thermisches Spritzgießen eines Polymerwerkstoffes im Sinne eines kostengünstigen Polymer-Massenbauteils erfolgen, wobei eine Formteilung parallel zu den Stirnflächen 35,36 des Axiallagers 15 besonders vorteilhaft ist. Delamination also Schichtablösung tritt erfindungsgemäß nicht auf.

Bei der bevorzugten Ausführungsform ist das Axiallager 15 vollständig aus einem nichtmetallischen Polymerwerkstoff ausgebildet, welcher die Werkstoffmatrix bildet. Gleitlagerschwermetalle, wie insbesondere Kupfer-, Zinn- oder Bleiverbindungen, sind dadurch im Wesentlichen obsolet. Es wird weiterhin der Vorteil erzielt, dass keine Korrosionsschutzmaßnahmen im Bereich des Axiallagers 15 erforderlich sind. Eine rostfreier Trägerkörper (Scheibe) ist nicht erforderlich. Denn die grundsätzlich hygroskopische Bremsflüssigkeit verursacht keinerlei korrosive Beanspruchung am vollständig nichtmetallischen Werkstoff des Axiallagers 15.

Zur Verstärkung der Werkstoffmatrix kann diese zumindest teilweise Verstärkungseinlagen wie insbesondere eine Faserverstärkung aufweisen, wobei prinzipiell viele statistisch also prinzipiell ungerichtet platzierte, eingebettete Kunstfasern (Filament, Garn oder Zwirn), insbesondere Faserabschnitte aus Kohlenstoff, Glas oder Aramid in der Verbundmatrix quasihomogen vorliegen können, und dadurch ein Gesamtverbund erzielt wird. Auch wechselweise Anteile oder Mischungen der vorstehend genannten Faserabschnitte und Bestandteile sind denkbar. Prinzipiell ist es alternativ oder ergänzend denkbar, dass die Faserverstärkung in Form von einem Gewebe vorliegt. Dadurch wird der innere Zusammenhalt des Axiallagers 15, wie auch dessen Bruchfestigkeit und Resistenz gegen Fluchtungsfehler und Schrägverschleiß, bei erhöhter Warmfestigkeit ermöglicht. Die Verwendung von Kohlefaser ist besonders vorteilhaft, weil die atomare Gitterstruktur besonders günstige tribologische Eigenschaften der beteiligten Reibpartner - in der Regel rostfreier, legierter Stahlwerkstoff - ermöglicht.

Die Fasern sind zumindest weitestgehend vollständig innerhalb des, zumindest bei dessen Formgebung teigigharzartig-viskos vorliegenden, Polymerwerkstoffes eingebettet. Dabei kann es sich besonders bevorzugt um einen thermoplastischen, zäh-festen Polymerwerkstoff (Kunststoff), wie insbesondere aus der Gruppe der Polyetherketone (Kurzzeichen PEK), insbesondere Polyetheretherketon (Kurzzeichen PEEK; PEEEK, PEEKEK) handeln, weil diese Werkstoffe eine hohe Glasübergangstemperatur und Schmelztemperatur aufweisen und dadurch besonders günstige Warmfestigkeitseigenschaften aufweisen.

Jedes Axiallager 15 ist prinzipiell als flächig-ebene Kreisscheibe mit Durchmesser D gestaltet, die den Reibpartnern zugewandte Stirnflächen 35,36 aufweisen, und wobei in einem Zentrum 37 der Kreisscheibe eine Durchgangsbohrung 38 vorgesehen ist.

Wenigstens eine der Stirnflächen 35,36, bevorzugt beide Stirnflächen 35,36, des Axiallagers 15 verfügen über mehrere, von dem Zentrum 37 sternförmig nach radial außen verlaufende, gleichartig gestaltete, und in gleichem Winkel α regelmäßig verteilt platzierte Nuten 39,40,41. Bei beidseitiger Anordnung sind die Nuten 39,40,41 der Stirnfläche 35 gegenüber den Nuten der Stirnfläche 36 in einem Winkel von vorzugsweise α/2 versetzt, damit keine Kerbwirkung eintritt. Bei der Ausführungsform sind 3 Nuten 39,40,41 vorgesehen. Die Nuten 39,40,41 verfügen über einen, sich nach radial außen erweiternden, (Kanal-)Querschnitt. Dabei ist der Querschnitt der Nuten 39,40,41 weitestgehend rechteckförmig ausgebildet. Eine Tiefe t der Nuten 39,40,41 ist im Wesentlichen konstant. In Draufsicht ist jede Nut 39,40,41 trapezförmig gestaltet. Radial außen gehen die Nuten 39,40,41 mit einem Radius r abgerundet, also allmählich, in den Umfang U des Axiallagers über. Ein Rest von einem Anguß A kann eine Spritzgussherstellung indizieren. Weiterhin können Reste von einem ringförmig umlaufender Formteilungsgrat am Umfang U am Axiallager verblieben sein, und ebenfalls die Spritzgussherstellung indizieren.

**Bezugszeichenliste**

| | | | |
|---|---|---|---|
| 1 | Bremssattel | 33 | Lasche |
| 2 | Gehäuse | 34 | Innenprofil |
| 3 | Kolben | 35 | Stirnfläche |
| 4 | Bohrung | 36 | Stirnfläche |
| 5 | Welle | 37 | Zentrum |
| 6 | Wellenende | 38 | Durchgangsbohrung |
| 7 | Betätigungshebel | 39 | Nut |
| 8 | Endabschnitt | 40 | Nut |
| 9 | Längsachse | 41 | Nut |
| 10 | Betätigungsvorrichtung | | |
| 11 | Rampenanordnung | α | Winkel |
| 12 | Rampenelement | t | Tiefe |
| 13 | Rampenelement | r | Radius |
| 14 | Wälzkörper | U | Umfang |
| 15 | Axiallager | A | Anguss |
| | | D | Durchmesser |
| 20 | Nachstellvorrichtung | | |
| 21 | Spindel | | |
| 22 | Endabschnitt | | |
| 23 | Schaft | | |
| 24 | Mutter | | |
| | | | |
| 26 | Feder | | |
| 27 | Federtopf | | |
| 28 | Lasche | | |
| 29 | Ausnehmung | | |
| 30 | Verzahnung | | |
| 31 | Patrone | | |
| 32 | Lasche | | |

## Patentansprüche

1. Bremssattel (1) einer Scheibenbremse, umfassend ein Gehäuse (2) mit einer Bohrung (4), in der ein Kolben (3) axial verschiebbar angeordnet ist, und eine Welle (5) zur Betätigung, die drehbar und axial verschiebbar im Gehäuse gelagert ist, und mit einem Wellenende(6) eine Gehäuseöffnung durchgreift, umfassend zwei gegeneinander verdrehbare Rampenelemente (12,13) zur Wandlung einer Drehbewegung der Welle (5) in eine axiale Verschiebung des Kolbens (3), wobei ein Rampenelement (12) drehfest mit dem Gehäuse (2) und ein Rampenelement (13) drehfest mit der Welle (5) verbunden ist, sowie eine Nachstellvorrichtung (20) mit einer Spindel (21), wobei ein Axiallager (15) zwischen Spindel (21) und Welle (5) vorgesehen ist, wenigstens eine Stirnfläche (35,36) des Axiallagers (15) mehrere, von einem Zentrum (37) sternförmig nach radial außen verlaufende Nuten (39,40,41) aufweist **dadurch gekennzeichnet, dass** das Axiallager (15) einstückig aus einer homogenen Werkstoffmatrix ausgebildet ist, wobei die Nuten (39,40,41) einen, sich nach radial außen erweiternden, Querschnitt aufweisen.

2. Bremssattel nach Anspruch 1, **dadurch gekennzeichnet, dass** das Axiallager (15) aus nichtmetallischem Werkstoff ausgebildet ist.

3. Bremssattel nach Anspruch 1, **dadurch gekennzeichnet, dass** die Werkstoffmatrix zumindest teilweise eine Faserverstärkung aufweist.

4. Bremssattel nach Anspruch 3, **dadurch gekennzeichnet, dass** die Faserverstärkung als Bestandteil ein oder mehrere, statistisch-ungerichtet platziert eingebettete, Kunstfasern als Filament, als Garn oder als Zwirn, wie insbesondere in Form von Kunstfaserabschnitten oder Kunstfasergewebe, oder eine Kombination von einem oder mehreren dieser Bestandteile, aufweist.

5. Bremssattel nach Anspruch 3 oder 4, **dadurch gekennzeichnet, dass** die Faserverstärkung zumindest einen Anteil Kohlefaser aufweist.

6. Bremssattel nach wenigstens einem der Ansprüche 3-5, **dadurch gekennzeichnet, dass** die Faserverstärkung zumindest einen Anteil Glasfaser aufweist.

7. Bremssattel nach Anspruch 1, **dadurch gekennzeichnet, dass** die Werkstoffmatrix zumindest einen Anteil Kunststoffwerkstoff aufweist.

8. Bremssattel nach Anspruch 7, **dadurch gekennzeichnet, dass** der Kunststoffwerkstoff einen Polymerwerkstoff, insbesondere einen thermoplastischen Polymerwerkstoff, aufweist.

9. Bremssattel nach Anspruch 8, **dadurch gekennzeichnet, dass** der Polymerwerkstoff zu der Gruppe der Polyetherketone (PEK) gehört.

10. Bremssattel nach Anspruch 1, **dadurch gekennzeichnet, dass** die Nuten (39,40,41) in Draufsicht trapezförmig sind.

11. Bremssattel nach einem der Ansprüche 1, 10, **dadurch gekennzeichnet, dass** ein Querschnitt der Nuten (39,40,41) weitestgehend rechteckförmig ausgebildet ist.

12. Bremssattel nach wenigstens einem der Ansprüche 1,10,11, **dadurch gekennzeichnet, dass** die Nuten (39,40,41) eine konstante Tiefe (t) aufweisen.

13. Bremssattel nach wenigstens einem der Ansprüche 1, 10 bis 12, **dadurch gekennzeichnet, dass** die Nuten (39,40,41) radial außen abgerundet mit einem Radius (r) in einen Umfang (U) des Axiallagers (15) einmünden.

14. Bremssattel nach wenigstens einem der Ansprüche 1, 10-13, **dadurch gekennzeichnet, dass** die Nuten (39,40,41) auf jeder der Stirnflächen (35,36) des Axiallagers (15) angeordnet sind.

## Claims

1. Brake caliper (1) of a disk brake, comprising a housing (2) having a bore hole (4), in which an axially displaceable piston (3) is arranged, and a shaft for actuation (5), which is supported so that it is rotatable and axially displaceable in the housing, and with one shaft end (6) passes through a housing aperture, comprising two contra-rotating ramp elements (12, 13) for converting a rotational movement of the shaft (5) into an axial displacement of the piston (3), one ramp element (12) being rotationally fixed to the housing (2) and one ramp element (13) being rotationally fixed to the shaft (5), and an adjusting device (20) having a spindle (21), an axial bearing (15) being provided between the spindle (21) and the shaft (5), at least one end face (35, 36) of the axial bearing (15) comprising multiple grooves (39, 40, 41) radiating radially outwards from a center (37), **characterized in that** the axial bearing (15) is integrally formed from a homogeneous material matrix, the grooves (39, 40, 41) having a cross section widening radially outwards.

2. Brake caliper according to Claim 1, **characterized in that** the axial bearing (15) is formed from non-metallic material.

3. Brake caliper according to Claim 1, **characterized in that** the material matrix, at least in part, comprises a fiber reinforcement.

4. Brake caliper according to Claim 3, **characterized in that** as a constituent the fiber reinforcement comprises one or more statistically non-directional embedded synthetic fibers in the form of filament, yarn or twisted yarn, in particular in the form of artificial fiber portions or artificial fiber woven fabric, or a combination of one or more of these constituents.

5. Brake caliper according to Claim 3 or 4, **characterized in that** the fiber reinforcement comprises at least one carbon fiber fraction.

6. Brake caliper according to one of Claims 3-5, **characterized in that** the fiber reinforcement comprises at least one glass fiber fraction.

7. Brake caliper according to Claim 1, **characterized in that** the material matrix comprises at least one plastic material fraction.

8. Brake caliper according to Claim 7, **characterized in that** the plastic material comprises a polymer material, in particular a thermoplastic polymer material.

9. Brake caliper according to Claim 8, **characterized in that** the polymer material belongs to the polyether ketone (PEK) group.

10. Brake caliper according to Claim 1, **characterized in that** in plan view the grooves (39, 40, 41) are of trapezoidal shape.

11. Brake caliper according to either of Claims 1 and 10, **characterized in that** a cross section of the grooves (39, 40, 41) is largely of rectangular shape.

12. Brake caliper according to at least one of Claims 1, 10 or 11, **characterized in that** the grooves (39, 40, 41) are of a constant depth (t).

13. Brake caliper according to at least one of Claims 1, 10 to 12, **characterized in that** the grooves (39, 40, 41) open radially outwards, radiused with a radius (r), into a circumference (U) of the axial bearing (15).

14. Brake caliper according to at least one of Claims 1, 10-13, **characterized in that** the grooves (39, 40, 41) are arranged on each of the end faces (35, 36) of the axial bearing (15).

## Revendications

1. Etrier de frein (1) pour frein à disque, comprenant
un boîtier (2) doté d'un alésage (4) dans lequel un piston (3) est disposé à coulissement axial,
un arbre d'actionnement (5) monté à rotation et à déplacement axial dans le boîtier et qui traverse par une extrémité (6) de l'arbre une ouverture du boîtier,
deux éléments en rampe (12, 13) aptes à tourner l'un par rapport à l'autre pour convertir à déplacement de rotation de l'arbre (5) en un déplacement axial du piston (3),
un élément en rampe (12) étant relié à rotation solidaire au boîtier (2) et un élément en rampe (13) étant relié à rotation solidaire avec l'arbre (5),
un ensemble d'ajustement (20) présentant une broche (21), un palier axial (15) étant prévu entre la broche (21) et l'arbre (5), au moins une surface frontale (35, 36) du palier axial (15) présentant plusieurs rainures (39, 40, 41) qui s'étendent en étoile radialement vers l'extérieur partant d'un centre (37),
**caractérisé en ce que**
le palier axial (15) est réalisé d'une seule pièce en un matériau de matrice homogène, les rainures (39, 40, 41) présentant une section transversale qui s'évase radialement vers l'extérieur.

2. Etrier de frein selon la revendication 1, **caractérisé en ce que** le palier axial (15) est réalisé en un matériau non métallique.

3. Etrier de frein selon la revendication 1, **caractérisé en ce que** le matériau de matrice présente au moins en partie un renfort de fibres.

4. Etrier de frein selon la revendication 3, **caractérisé en ce que** le renfort de fibres présente comme composants une ou plusieurs fibres synthétiques incorporées en étant placées statistiquement sans être orientées sous la forme d'un filament, d'un fil ou d'un fil torsadé, par exemple sous la forme de sections de fibres synthétiques ou de tissus de fibres synthétiques ou d'une combinaison d'un ou plusieurs de ces composants.

5. Etrier de frein selon les revendications 3 ou 4, **caractérisé en ce que** le renfort de fibres présente au moins une certaine teneur en fibres de carbone.

6. Etrier de frein selon au moins l'une des revendications 3 à 5, **caractérisé en ce que** le renfort de fibres présente au moins une certaine teneur en fibres de verre.

7. Etrier de frein selon la revendication 1, **caractérisé en ce que** le matériau de matrice présente au moins une certaine teneur en matière synthétique.

8. Etrier de frein selon la revendication 7, **caractérisé en ce que** le matériau synthétique présente un matériau polymère et en particulier un matériau polymère thermoplastique.

9. Etrier de frein selon la revendication 8, **caractérisé en ce que** le matériau polymère fait partie du groupe des polyéther cétones (PEK).

10. Etrier de frein selon la revendication 1, **caractérisé en ce que** les rainures (39, 40, 41) présentent vu en plan la forme d'un trapèze.

11. Etrier de frein selon l'une des revendications 1, 10, **caractérisé en ce que** la section transversale des rainures (39, 40, 41) est très largement rectangulaire.

12. Etrier de frein selon au moins l'une des revendications 1, 10, 11, **caractérisé en ce que** les rainures (39, 40, 41) présentent une profondeur (t) constante.

13. Etrier de frein selon au moins l'une des revendications 1, 10 à 12, **caractérisé en ce que** les rainures (39, 40, 41) sont arrondies radialement vers l'extérieur à un rayon (r) et débouchent à la périphérie (U) du palier axial (15).

14. Etrier de frein selon au moins l'une des revendications 1, 10 à 13, **caractérisé en ce que** les rainures (39, 40, 41) sont disposées sur chacune des surfaces frontales (35, 36) du palier axial (15).
